# EUROPÄISCHE PATENTSCHRIFT

(11) **EP 3 349 297 B1**
(45) Veröffentlichungstag und Bekanntmachung des Hinweises auf die Patenterteilung: **03.04.2019**
(21) Anmeldenummer: 17210797.1
(22) Anmeldetag: 28.12.2017
(51) Int. Cl.: H01M 10/655

(54) **AKKUMULATORTEMPERIERANORDNUNG**
RECHARGEABLE BATTERY TEMPERATURE CONTROL ASSEMBLY
DISPOSITIF DE THERMORÉGULATION POUR ACCUMULATEUR

(30) Priorität: 12.01.2017 DE 102017200442
(43) Veröffentlichungstag der Anmeldung: 18.07.2018
(73) Patentinhaber: Mahle International GmbH, 70376 Stuttgart (DE)
(72) Erfinder: GORZELLIK, Sarah, 70195 Stuttgart (DE); REISINGER, Dieter, 71665 Vaihingen/Enz (DE); WALTER, Christoph, 70469 Stuttgart (DE)
(74) Vertreter: BRP Renaud & Partner mbB Rechtsanwälte Patentanwälte Steuerberater

(56) Entgegenhaltungen:
- DE-A1-102009 058 809
- DE-A1-102010 029 872
- DE-A1-102014 218 137

## Beschreibung

Die vorliegende Erfindung betrifft eine Akkumulatortemperieranordnung mit einem elektrischen Akkumulator sowie einer Temperiereinrichtung zum Temperieren des Akkumulators, gemäß dem Oberbegriff des Anspruchs 1.

Elektrische Akkumulatoren dienen der elektrischen Versorgung eines Verbrauchers. In einem Kraftfahrzeug kommen derartige Akkumulatoren beispielsweise zum Antreiben des Kraftfahrzeugs zum Einsatz. Bei einer Vielzahl derartiger Verbraucher, insbesondere in einem Kraftfahrzeug, erfordern die hohen Anforderungen an den Akkumulator eine Temperierung, insbesondere eine Kühlung, des Akkumulators. Hierzu kommen Temperiereinrichtungen zum Einsatz, die üblicherweise mehrere Temperierelemente aufweisen, welche mit einer Seite des Akkumulators in wärmeaustauschendem Kontakt stehen. Zur Effizienzsteigerung der Temperiereinrichtung und/oder für eine homogene Temperierung des Akkumulators ist es bekannt, die Temperierelemente mit Hilfe eines Anpresselements gegen die entsprechende Seite des Akkumulators vorzuspannen.

Um diese Vorspannung zu erzielen, ist es prinzipiell vorstellbar, das Anpresselement zwischen dem Akkumulator und der zugehörigen Anwendung, beispielsweise dem Kraftfahrzeug, anzuordnen und gegen beide vorzuspannen. Nachteilig hierbei ist, dass hierdurch die auszugleichenden Toleranzen, insbesondere die Toleranzkette, vergrößert wird. Zudem werden mechanische Beanspruchungen der Anwendung, insbesondere Schwingungen der Anwendung, auf das Anpresselement und den Akkumulator übertragen und führen beispielsweise zu einer reduzierten Effizienz und/oder einer reduzierten Homogenität der Temperierung des Akkumulators.

Aus der DE 10 2013 225 628 A1 ist es bekannt, ein solches Anpresselement zusammen mit dem Akkumulator innerhalb eines Gehäuses anzuordnen und zwischen dem Gehäuse und einem solchen, ebenfalls im Gehäuse angeordneten Temperierelement vorzuspannen, um somit das Temperierelement in Richtung des Akkumulators vorzuspannen.

Aus der DE 10 2008 034 854 A1 ist eine Batterie mit mehreren jeweils ein Zellgehäuse aufweisenden Batteriezellen, sowie eine Kühlplatte zu deren Kühlung bekannt. Für eine vorgespannte Befestigung der jeweiligen Batteriezelle an der Kühlplatte ist eine zugehörige Verspannvorrichtung vorgesehen, welche als elastische und Kraft übertragende Einrichtung ausgebildet ist.

Aus der DE 10 2014 218 137 A1 ist eine Akkumulatortemperieranordnung mit einem elektrischen Akkumulator sowie einer Temperiereinrichtung zum Temperieren des Akkumulators bekannt, wobei die Temperiereinrichtung ein Flachrohr aufweist, das mit einer Unterseite des Akkumulators in wärmeaustauschendem Kontakt steht. Ebenfalls vorgesehen ist ein Anpresselement, welches auf der von der Unterseite abgewandten Seite zumindest eines solchen Temperierelements angeordnet ist und zumindest ein solches Temperierelement in Richtung der Unterseite des Akkumulators vorspannt. An der Unterseite ist an einer dem Anpresselement zugewandten Seite zumindest ein Vorspannelement angeordnet, wobei das Anpresselement ein zu dem Verspannelement korrespondierendes Klemmmittel aufweist, das zusammen mit dem Verspannelement eine Verspannvorrichtung bildet, die das Anpresselement in Richtung der Unterseite vorspannt.

Aus der DE 10 2010 029 872 A1 ist eine weitere Akkumulatortemperieranordnung mit einem elektrischen Akkumulator sowie einer Temperiereinrichtung zum Temperieren des Akkumulators bekannt.

Nachteilig bei den bekannten Lösungen ist ein verhältnismäßig großer Bauraumbedarf. Zudem kann die gemeinsame Anordnung der Temperierelemente und des Akkumulators in einem Gehäuse zu Beschädigungen des Akkumulators führen, insbesondere, wenn ein durch die Temperierelemente strömendes Temperiermittel aus den Temperierelementen austritt.

Die vorliegende Erfindung beschäftigt sich daher mit der Aufgabe, für eine Akkumulatortemperieranordnung der eingangsgenannten Art eine verbesserte oder zumindest alternative Ausführungsform anzugeben, die sich insbesondere durch eine bauraumsparendere Ausgestaltung und/oder eine erhöhte Betriebssicherheit und/oder eine verbesserte Homogenität der Temperierung des Akkumulators auszeichnet und zudem durch eine vereinfachte Fertigung kostengünstig herzustellen ist.

Diese Aufgabe wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, bei einer Akkumulatortemperieranordnung, ein Anpresselement in Richtung einer Unterseite eines Akkumulators, mit Hilfe einer Verspannvorrichtung zu fixieren und zumindest ein Temperierelement zwischen der Unterseite des Akkumulators und dem Anpresselement zu verspannen. Hierzu ist ein Verspannelement an der Unterseite des Akkumulators angeordnet, das zumindest teilweise in Richtung des Anpresselementes hervorsteht. Das Verspannelement steht dabei mit einem korrespondierenden Klemmmittel, das zusammen mit dem Verspannelement die zuvor beschriebene Verspannvorrichtung bildet und am Anpresselement ausgebildet ist, in einer Wirkverbindung. Die Wirkverbindung, in Form der Vorspannung zwischen dem Verspannelement und dem Klemmmittel, ermöglicht die gewünschte Flächenpressung zwischen dem zumindest einem Temperierelement und der Unterseite des Akkumulators. Hierdurch stellt sich ein zumindest möglichst optimaler thermischer Kontakt zwischen dem zumindest einem Temperierelement und der Unterseite ein, wodurch eine homogene Kühlung von Akkumulatorzellen, welche unmittelbar oder mittelbar an der Unterseite eines Akkumulatorgehäuses anliegen, ermöglicht wird. Ferner ist durch die Vorspannung direkt zwischen dem Anpresselement und dem Verspannelement an der Unterseite des Akkumulators eine von äußeren Bestandteilen weitgehend autarke Akkumulatortemperieranordnung geschaffen, die zumindest weniger Toleranzen auszugleichen hat und weniger mechanischen Belastungen ausgesetzt ist. Die Entkopplung von beispielsweise einem Kraftfahrzeugboden erhöht in erster Linie die Betriebssicherheit der Akkumulatortemperieranordnung. Aufgrund des möglichen Entfalls von weiteren, auf der vom Akkumulator abgewandten Seite des Anpresselementes angeordneten Bestandteilen, kann die Anordnung zudem bauraumsparender ausgebildet werden. Ferner ist es möglich, die Temperierelemente sowie das Anpresselement außerhalb des Gehäuses des Akkumulators anzuordnen, so dass durch die Temperierelemente bedingte Beschädigungen des Akkumulators verhindert oder zumindest reduziert werden und die Betriebssicherheit weiter verbessert wird. Durch die Ausgestaltung mit einer lösbaren Verspannvorrichtung ist eine erleichterte Montage und Demontage ermöglicht. Ferner wird durch die vorgesehene Verspannvorrichtung eine Fertigung bzw. eine Montage der Akkumulatortemperieranordnung ohne Schrauben oder dergleichen, zur Fixierung des Anpresselementes an der Unterseite des Akkumulators, ermöglicht, wodurch sich zum einen der Komplexitätsgrad und zum anderen die Fertigungskosten reduzieren lassen.

Dem Erfindungsgedanken entsprechend umfasst die Akkumulatortemperieranordnung, insbesondere für die Anwendung in einem Kraftfahrzeug, einen derartigen elektrischen Akkumulator und eine Temperiereinrichtung zum Temperieren des Akkumulators, die zumindest ein derartiges Temperierelement aufweist, das mit der Unterseite des Akkumulators in wärmeaustauschendem Kontakt steht. Ferner umfasst die Akkumulatortemperieranordnung ein derartiges Anpresselement, das auf der von der Unterseite abgewandten Seite zumindest eines solchen Temperierelements angeordnet ist und zumindest ein solches Temperierelement in Richtung der Unterseite des Akkumulators vorspannt. Zur Vorspannung der Temperierelemente gegen die Unterseite ist die Verspannvorrichtung vorgesehen, die aus dem Verspannelement und dem Klemmmittel gebildet ist. Das Verspannelement ist an der Unterseite des Akkumulators angeordnet und kann mit dem Klemmmittel, welches am Anpresselement ausgebildet ist, zumindest derart verklemmt, dass eine Vorspannung des Anpresselementes in Richtung der Unterseite ermöglicht und somit zumindest ein derartiges Temperierelement ebenfalls in Richtung der Unterseite vorgespannt werden kann. Dahingehend kann eine gewünschte homogene Verpressung zwischen dem zumindest einem Temperierelement und der Unterseite des Akkumulators mit einfachen Mitteln erreicht werden.

In einer vorteilhaften Weiterbildung der erfindungsgemäßen Idee ist das Verspannelement integral an der Unterseite des Akkumulators ausgebildet. Durch die integrale Ausbildung des Verspannelementes kann ein zusätzlicher Arbeitsschritt zum nachträglichen Anbringen an die Unterseite des Akkumulators eingespart werden. Bevorzugt sind das Akkumulatorgehäuse sowie das daran angeordnete Verspannelement als Kunststoffspritzgussteile hergestellt, sodass ein Spritzgusswerkzeug zur Herstellung des Akkumulatorgehäuses derart ausgebildet ist, dass das Verspannelement einheitlich mit ausgeformt werden kann.

In einer weiteren vorteilhaften Weiterbildung sind mehrere Verspannvorrichtungen zum Verspannen des Anpresselementes vorgesehen, die insbesondere aus als einteilig bzw. monolithisch ausgebildeten Verspannelementen und als einteilig bzw. monolithisch ausgebildeten Klemmmitteln ausgebildet sind. Die einteilige bzw. monolithische Ausbildung der Verspannelemente kann einerseits wie zuvor beschrieben durch eine integrale Ausformung an der Unterseite des Akkumulators erfolgen und andererseits durch ein mittelbares oder unmittelbares Aufbringen an die Unterseite des Akkumulators. Beispielsweise können nachträglich aufzubringende Blechleisten vorgesehen sein, an denen zumindest ein derartiges Verspannelement und bevorzugt mehrere Verspannelemente angeordnet sind.

Entsprechend einer ersten erfindungsgemäßen Ausführungsform ist das Verspannelement als eine Stufenwelle, mit einem definierten Hinterschnitt ausgebildet, wobei das Klemmmittel als ein federndes Klemmelement ausgebildet ist, das kraft- und formschlüssig an der Stufenwelle gehalten ist und insbesondere mit der Stufenwelle verrastet. Das federnde Klemmelement am Anpresselement bewirkt die Vorspannung, mit der das Anpresselement zumindest ein derartiges Temperierelement an die Unterseite des Akkumulators verklemmt.

Entsprechend der ersten erfindungsgemäßen Ausführungsform weist das Klemmelement zum Halten der Stufenwelle zwei voneinander beabstandete und einander zugewandte federnde Halbkreise auf. Bevorzugt weisen die Halbkreise eine konvexe Form auf, wodurch ein Verrasten zwischen dem Klemmelement und dem Verspannelement verbessert wird. Bevorzugt ist zumindest ein derartiges Klemmmittel aus einem metallischen Material hergestellt, insbesondere aus einem Stahlfederblech.

In einer zweckmäßigen Weiterbildung der ersten beschriebenen Ausführungsvariante weist zumindest ein derartiger federnder Halbkreis eine Werkzeugaufnahme auf, die insbesondere zum Lösen einer Rastverbindung ausgebildet ist. Die Werkzeugaufnahme dient einer vereinfachten Demontage des Anpresselementes, indem mit Hilfe eines Werkzeugs die Rastverbindungen zwischen den Klemmmitteln und den Verspannelementen gelöst werden kann. Entsprechend einer zweiten erfindungsgemäßen Ausführungsform ist das Verspannelement als eine erste Blechleiste, insbesondere mit zumindest einer daran in Richtung des Klemmmittels hervorstehenden Rastsicke, ausgebildet, wobei das Klemmmittel eine zu der ersten Blechleiste bzw. zu einer derartigen Rastsicke korrespondierende Ausstanzung aufweist, und wobei die erste Blechleiste bzw. eine derartige Rastsicke mit dem Klemmmittel in einer kraft- und formschlüssigen Wirkverbindung steht.

In einer vorteilhaften Weiterbildung der zweiten erfindungsgemäßen Ausführungsform sind die Rastsicken an der ersten Blechleiste alternierend zu den jeweilig benachbarten Temperierelementen ausgebildet. Das heißt, dass die Rastsicken jeweils versetzt zueinander angeordnet sind, damit ein unbeabsichtigtes Lösen der Verspannvorrichtung verhindert werden kann.

Zudem sind in einer weiteren vorteilhaften Weiterbildung der zweiten erfindungsgemäßen Ausführungsform die Rastsicken konvex zu den jeweilig benachbarten Temperierelementen ausgeformt, wodurch die Rastverbindung zwischen den Rastsicken und dem Klemmmittel am Anpresselement verbessert wird.

Entsprechend einer dritten erfindungsgemäßen Ausführungsform ist das Verspannelement als eine zweite Blechleiste, insbesondere mit daran hervorstehenden Rastelementen, die einen Hinterschnitt aufweisen, ausgebildet. Hierbei weist das Klemmmittel eine zu den Rastelementen korrespondierende Ausstanzung auf, die eine kraft- und formschlüssige Aufnahme der Rastelemente ermöglicht.

Eine vorteilhafte Weiterbildung der dritten Ausführungsvariante sieht vor, dass die Rastelemente integral an der zweiten Blechleiste ausgeformt sind. Bevorzugt kann die zweite Blechleiste aus einem Blech gefertigt sein, das zunächst zumindest zur Ausbildung des Hinterschnitts passend gestanzt wird und anschließend zur Erzeugung der in Richtung des Anpresselementes hervorstehenden Rastelemente, in einem rechten Winkel zur Unterseite des Akkumulators, passend aufgekantet wird.

In einer weiteren vorteilhaften Weiterbildung der dritten Ausführungsform sind die Rastelemente an der zweiten Blechleiste alternierend zu den jeweilig benachbarten Temperierelementen angeordnet. Das heißt, dass die Rastelemente jeweils versetzt zueinander angeordnet sind, damit ein unbeabsichtigtes Lösen der Verspannvorrichtung verhindert werden kann.

Entsprechend einer vorteilhaften Weiterbildung der ersten und zweiten erfindungsgemäßen Ausführungsform sind die erste Blechleiste und/oder die zweite Blechleiste beidseitig, jeweils an den zu den Temperierelementen zugewandten Seiten aufgekantet. Die Aufkantung ist dahingehend sinnvoll, dass diese zu einer erhöhten Stabilität der ersten Blechleiste und/oder der zweiten Blechleiste beitragen können.

Prinzipiell kann zumindest ein derartiges Verspannelement an der Unterseite des Akkumulators insbesondere angeschweißt, angeklebt oder angenietet sein. Im Rahmen der Erfindung sind alle denkbaren Mittel zur Anordnung von zumindest einem Verspannelement an die Unterseite des Akkumulators mit geschützt. Ferner kann die Verspannvorrichtung als solches beliebig im Rahmen der Erfindung ausgebildet sein, sodass sich zumindest eine Vorspannung des Anpresselementes in Richtung der Unterseite des Akkumulators einstellt.

Das jeweilige Temperierelement kann prinzipiell beliebig ausgestaltet sein, sofern es eine Temperierung des Akkumulators ermöglicht. Bei bevorzugten Ausführungsformen ist zumindest ein solches Temperierelement, vorzugsweise alle Temperierelemente, ein von einem Temperiermittel der Temperiereinrichtung durchströmbares Flachrohr. Das heißt, dass zum Temperieren des Akkumulators im Betrieb der Temperiereinrichtung das Temperiermittel durch die Flachrohre strömt und somit den Akkumulator temperiert, insbesondere kühlt.

Grundsätzlich können das Anpresselement und das zumindest eine Temperierelement separate Bestandteile der Akkumulatortemperieranordnung sein.

Denkbar sind auch Varianten, bei denen das Anpresselement und zumindest ein solches Temperierelement, das vom Anpresselement in Richtung der Unterseite vorgespannt ist, als eine Einheit, insbesondere monolithisch bzw. materialeinheitlich, ausgebildet sind. Diese Einheit, auch eine Anpress-Temperier-Einheit genannt, weist also ein solches Anpresselement und zumindest ein solches Temperierelement auf. Dabei ist die Einheit bevorzugt aus einem metallhaltigen Material, insbesondere aus einem Metall, beispielsweise aus Aluminium oder einer Aluminiumlegierung, hergestellt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine räumliche Ansicht einer Akkumulatortemperieranordnung in einer Ausführungsvariante mit Verspannelementen, die als Stufenwellen ausgebildet sind,
- Fig. 2: eine Draufsicht eines Anpresselementes mit daran angeordneten Klemmmitteln, die als federnde Klemmelemente ausgebildet sind,
- Fig. 3: eine räumliche Ansicht der Akkumulatortemperieranordnung aus Fig. 1 mit aufgesetztem Anpresselement aus Fig. 2,
- Fig. 4: eine Schnittdarstellung im Bereich einer Verspannvorrichtung aus Fig. 3,
- Fig. 5: eine isometrische Darstellung der Verspannvorrichtung aus Fig. 4,
- Fig. 6: eine räumliche Ansicht einer zweiten Ausführungsvariante einer derartigen Akkumulatortemperieranordnung mit einer ersten Blechleiste,
- Fig. 7: eine isometrische Darstellung der ersten Blechleiste mit daran angeordneten Rastsicken als Verspannelemente,
- Fig. 8: eine Schnittdarstellung der zweiten Ausführungsvariante der Akkumulatortemperieranordnung aus Fig. 6,
- Fig. 9: eine Draufsicht der zweiten Ausführungsvariante der Akkumulatortemperieranordnung aus Fig. 6,
- Fig. 10: eine räumliche Ansicht einer dritten Ausführungsvariante einer derartigen Akkumulatortemperieranordnung mit einer zweiten Blechleiste,
- Fig. 11: eine isometrische Darstellung der zweiten Blechleiste mit daran angeordneten Rastelementen,
- Fig. 12: eine Draufsicht des Anpresselementes in der dritten Ausführungsvariante mit daran angeordneten Klemmmitteln, die als Ausstanzungen ausgebildet sind.

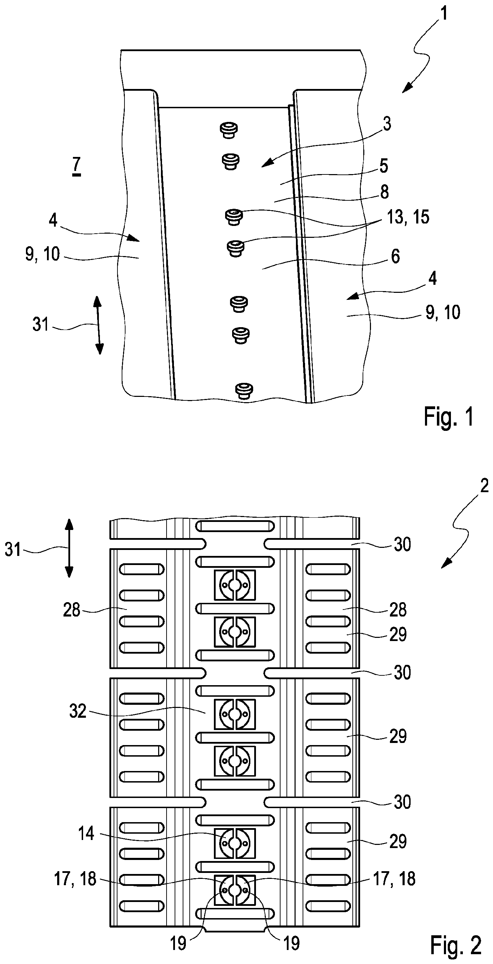

Fig. 1 zeigte eine räumliche Ansicht einer Akkumulatortemperieranordnung 1, insbesondere für ein Kraftfahrzeug 11, in einer Ausführungsvariante mit Verspannelementen 13, die als Stufenwellen 15 (Pilzköpfe) ausgebildet sind. In der gezeigten Darstellung ist eine Unterseite 3 eines elektrischen Akkumulators 3 dargestellt, an dem integral die Stufenwellen 15 angeordnet sind. Die Stufenwellen 15 sind mittig zwischen zwei beabstandeten Temperierelementen 9 einer Temperiereinrichtung 4, die als Flachrohre 10 ausgebildet sind, angeordnet. Die Flachrohre 10 liegen an unmittelbar an der Unterseite 8 des Akkumulators 3 an. Insbesondere beschreibt die Unterseite 3 einen Gehäuseboden 6 eines Akkumulatorgehäuses 5, das zur Aufnahme von im Übrigen nicht gezeigten Akkumulatorzellen 7 dient. Die Akkumulatorzellen 7 stehen mit dem Gehäuseboden 6 in wärmeaustauschendem Kontakt. Im Betrieb strömt ein Temperiermittel durch die Temperierelemente 9 und temperiert, insbesondere kühlt, somit den Akkumulator 3 bzw. die Akkumulatorzellen 7.

In der Fig. 2 ist eine Draufsicht eines Anpresselementes 2 mit daran angeordneten Klemmmitteln 14 gezeigt, die als federnde Klemmelemente 17 ausgebildet sind. Das Anpresselement 2 erstreckt sich wie die Temperierelemente 9 in einer Längsrichtung 31 und weist einen in Längsrichtung 31 verlaufenden Steg 32 auf, von dem quer zur Längsrichtung 31 in entgegengesetzten Richtungen jeweils ein Flügel 28 absteht. Die Flügel 28 erstrecken sich in Längsrichtung 31 und können jeweils ein solches Temperiermittel 9 in Richtung der Unterseite 8 des Akkumulators 3 vorspannen. Das Anpresselement 2 kann quer zur Längsrichtung 31 symmetrisch ausgebildet sein. In dem gezeigten Beispiel ist zu erkennen, dass das Anpresselement 2 im Bereich des Steges 32 in Längsrichtung 31 voneinander beabstandete derartige Klemmmittel 14 aufweist, die bezüglich des Anpresselements 2 und des Stegs 32 mittig, insbesondere quer zur Längsrichtung 31 mittig, angeordnet sind. Die Klemmmittel 14 sind derart ausgebildet, dass diese mit den Verspannelementen 13 an der Unterseite 8 des Akkumulators 3 jeweils paarweise eine Verspannvorrichtung 12 bilden. Um eine homogene Verspannung mit Hilfe der Verspannvorrichtungen 12 zu realisieren, können die Verspannvorrichtungen 12 in Längsrichtung 31 über die Länge des Anpresselementes 2 bzw. der Temperierelemente 9 gleichmäßig verteilt sein. Fig. 2 ist zu entnehmen, dass die Flügel 28 des Anpresselements 2 jeweils in Längsrichtung 31 segmentiert ausgebildet sind. Das heißt, dass der jeweilige Flügel 28 in Längsrichtung 31 beabstandete Segmente 29 aufweist, wobei vorliegend in Längsrichtung 31 benachbarte Segmente 29 durch eine quer zur Längsrichtung 31 verlaufende Nut 30 des Flügels 28 voneinander beabstandet sind. Somit können die Segmente 29 des jeweiligen Flügels 28 das zugehörige Temperierelement 9 unabhängig voneinander in Richtung der Unterseite 8 bzw. des Gehäusebodens 6, insbesondere gegen die Unterseite 8 bzw. des Gehäusebodens 6, vorspannen. Somit erfolgen eine homogenere Vorspannung der Temperierelemente 9 in Richtung der Unterseite 8 und/oder ein besserer Ausgleich von Unebenheiten und/oder Toleranzen.

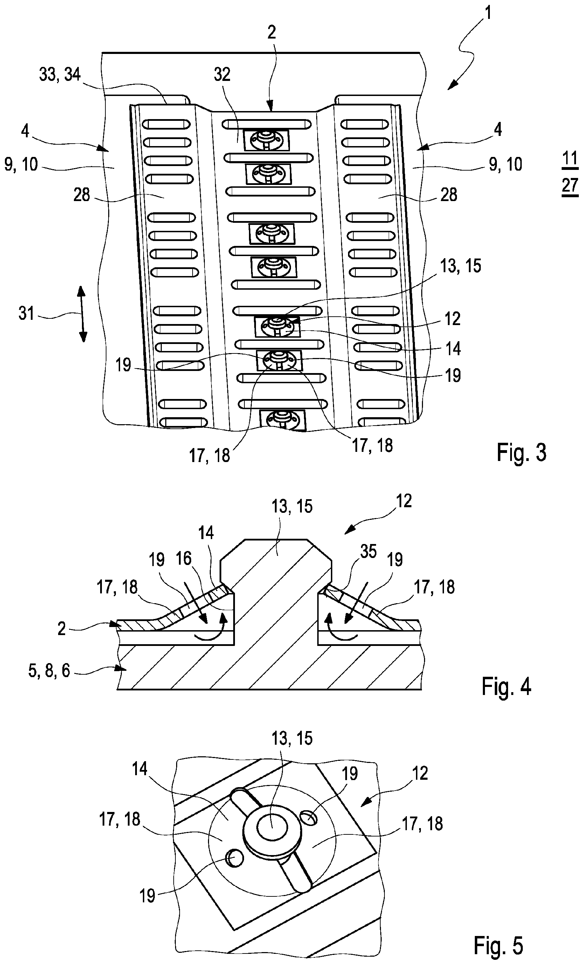

Fig. 3 zeigt eine räumliche Ansicht der Akkumulatortemperieranordnung 1 aus Fig. 1 mit aufgesetztem Anpresselement 2 aus Fig. 2. Das Anpresselement 2 ist mit Hilfe der Verspannvorrichtung 12 fest an der Unterseite 8 des Akkumulators 3 gehalten, wobei der Steg 32 zwischen zwei benachbarten Temperierelementen 9 positioniert ist. Die beidseitig quer zur Längsrichtung 31 abstehenden Flügel 28 des Anpresselementes 2 verklemmen jeweils zumindest teilweise ein derartiges Temperierelement 9 in Richtung der Unterseite 8 des Akkumulators 3. Insbesondere kann zwischen dem jeweiligen Temperierelement 9 und der Unterseite 8 bzw. dem Gehäuseboden 6 des Akkumulators 3 eine Schicht 33 wärmeleitfähigen Materials vorgesehen ist. Die jeweilige Schicht 33 verbessert dabei den Wärmetransport zwischen dem Temperierelement 9 und der Unterseite 8 bzw. Unterboden 6 des Akkumulators 3 und somit den Wärmetransport zwischen den Akkumulatorzellen 7 und dem zugehörigen Temperierelement 9. Die jeweilige Schicht 33 ist also insbesondere ein wärmeleitfähigkeitsleitfähiges Interface 34.

Bevorzugt wird ein derartiges Temperierelement 9 beidseitig in Längsrichtung 31 von jeweils einem derartigen Flügel 28 eines solchen Anpresselementes 2 gehalten bzw. vorgespannt. Ebenso denkbar ist, dass Ein Temperierelement 9 lediglich von einem derartigen Flügel 28 gehalten bzw. vorgespannt ist. Ferner ist ebenfalls denkbar, dass das Anpresselement 2 und zumindest ein solches Temperierelement 9 als eine im Übrigen nicht gezeigte einstückige Anpress-Temperier-Einheit 27 ausgebildet ist.

Fig. 4 zeigt eine Schnittdarstellung der Akkumulatortemperieranordnung 1 im Bereich der Verspannvorrichtung 12. Das Verspannelement 13, welches im gezeigten Beispiel als Stufenwelle 15 ausgebildet ist, kann bevorzugt integral am Gehäuseboden 6 des Akkumulatorgehäuses 5 ausgeformt sein. Die Stufenwelle 15 kann eine, durch einen Hinterschnitt 16 erzeugte, abgeschrägte Abstützfläche 35 aufweisen, an der sich das Klemmmittel 14 des Anpresselementes 2 form- und kraftschlüssig abstützen kann. Das Klemmmittel 14 kann federnde Klemmelemente 17 aufweisen, die beim Verrasten mit zumindest einem derartigen Verspannelement 13 kurzzeitig elastisch verformbar sind.

Die Fig. 5 zeigt eine isometrische Darstellung der zuvor beschriebenen Verspannvorrichtung 12 aus Fig. 4. In der Abbildung zu erkennen ist, dass das Klemmmittel 14 aus zwei federnden Klemmelementen 17 gebildet ist, die wiederum als voneinander beabstandete Halbkreise 18 ausgebildet sind. Die Halbkreise 18 können an einer der Unterseite 8 des Akkumulators 3 abgewandte Seite konvex ausgebildet sein. Ferner können die Klemmelemente 17 jeweils eine Werkzeugaufnahme 19 aufweisen, die ein vereinfachtes Lösen der Verspannvorrichtung 12 mit Hilfe eines Werkzeuges ermöglicht.

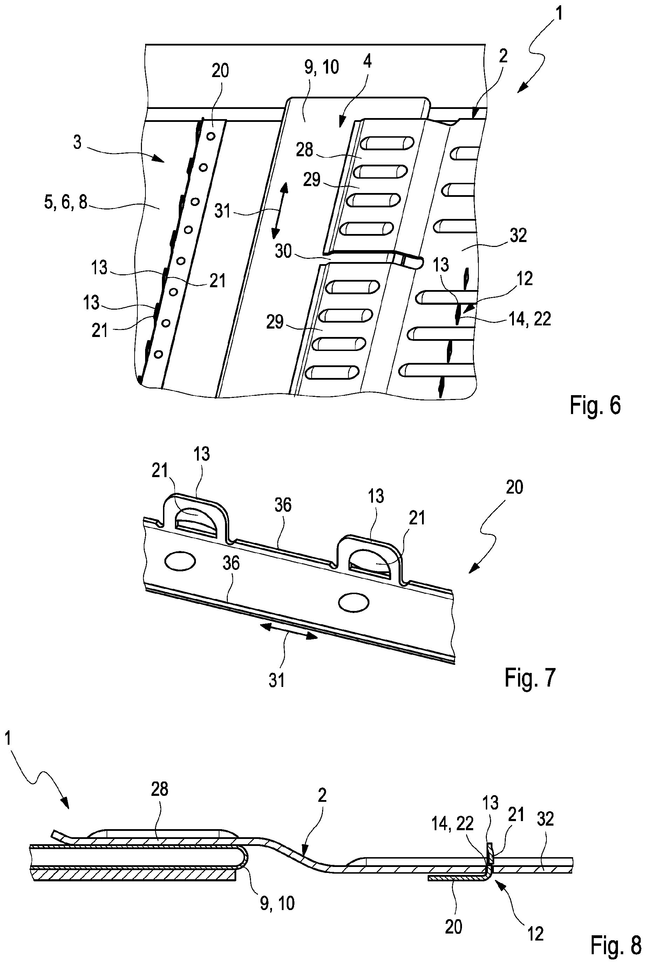

Fig. 6 zeigt eine räumliche Ansicht einer zweiten Ausführungsvariante der Akkumulatortemperieranordnung 1 mit einer ersten Blechleiste 20, die zumindest mehrere Verspannelemente 13 aufweist. Im Gegensatz zur zuvor beschriebenen ersten Ausführungsvariante, sind die Verspannelemente 13 nicht integral am Gehäuseboden 6 des Akkumulatorgehäuses 5 ausgebildet, sondern an einer ersten Blechleiste 20, die nachträglich an die Unterseite 8 des Akkumulators 3 aufgebracht werden kann. Die erste Blechleiste 20 kann angeschweißt, angenietet oder angeklebt sein und ist ebenfalls im Bereich zwischen zwei benachbarten Temperierelementen 9 angeordnet.

Fig. 7 zeigt eine isometrische Darstellung der ersten Blechleiste 20 mit daran angeordneten Verspannelementen 13, an denen jeweils eine Rastsicke 21 ausgebildet ist. Die erste Blechleiste 20 kann insbesondere aus einem Blech hergestellt sein, das zur Erzeugung der Verspannelemente 13 zumindest einseitig im Bereich der Verspannelemente 13 aufgekantet sein kann. Die Verspannelemente 13 können orthogonal zu der ersten Blechleiste 20, insbesondere an einer dem Gehäuseboden 6 abgewandten Seite hervorstehen. Die Rastsicken 21 an den jeweiligen Verspannelementen 13 können quer zur Längsrichtung 31 konvex ausgeformt sein. Ferner können die Rastsicken 21 an der ersten Blechleiste 20 alternierend zu den jeweilig benachbarten Temperierelementen 9 angeordnet sein. Durch die alternierende Anordnung der Rastsicken 21 kann ein unabsichtliches und/oder ungewolltes Lösen des Anpresselementes 2 zumindest verhindert oder zumindest erschwert werden. Zweckmäßig können zur Steigerung der Stabilität der ersten Blechleiste 20 beidseitig die Längsseiten mit Aufkantungen 36 versehen sein.

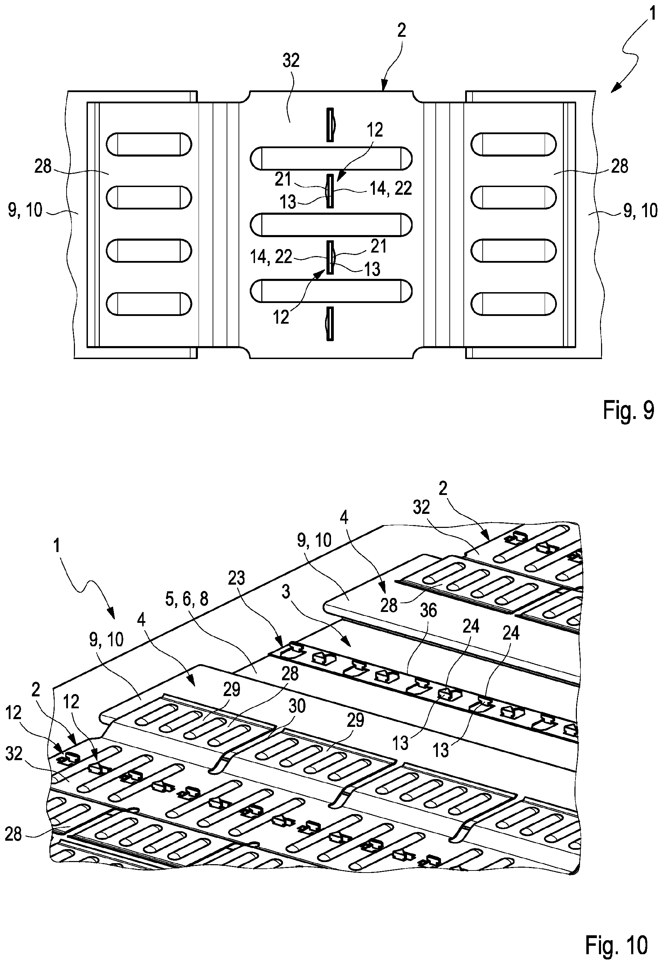

Die Fig. 8 und Fig. 9 zeigen jeweils die zweite Ausführungsvariante einer derartigen Akkumulatortemperieranordnung 1 in einem Querschnitt und einer Draufsicht. Der Unterschied zur ersten Ausführungsvariante ist im Wesentlichen die abweichende Verspannvorrichtung 12. In Fig. 8 gut zu erkennen ist, dass an der ersten Blechleiste 20, orthogonal in Richtung des Anpresselementes 2, das Verspannelement 13 hervorsteht. Das Anpresselement 2 kann bevorzugt derart auf die erste Blechleiste 20 aufgedrückt sein, dass die Verspannelemente 13 hierfür vorgesehene korrespondierend ausgebildete Ausstanzungen 22 am Anpresselement 2 durchdringen. Hierbei ist insbesondere für die Rastverbindung wesentlich, dass die Rastsicke 21 mit dem Anpresselement 2 fest verrastet, so dass das Anpresselement 2 mit denen daran angeordneten Flügeln 28 zumindest ein Temperierelement 9 in Richtung der Unterseite 8 des Akkumulators 3 vorspannen kann.

Fig. 10 zeigt eine räumliche Ansicht einer dritten Ausführungsvariante der Akkumulatortemperieranordnung 1 mit einer zweiten Blechleiste 23. An der zweiten Blechleiste 23 stehen mehrere orthogonal in Richtung des Anpresselementes 2 gerichtete Rastelemente 24 vor, die einen Hinterschnitt 25 aufweisen. Die Rastelemente 24 bilden zusammen mit dazu korrespondierend ausgebildeten Ausstanzungen 26 am Anpresselement 2 jeweils die Verspannvorrichtungen 12.

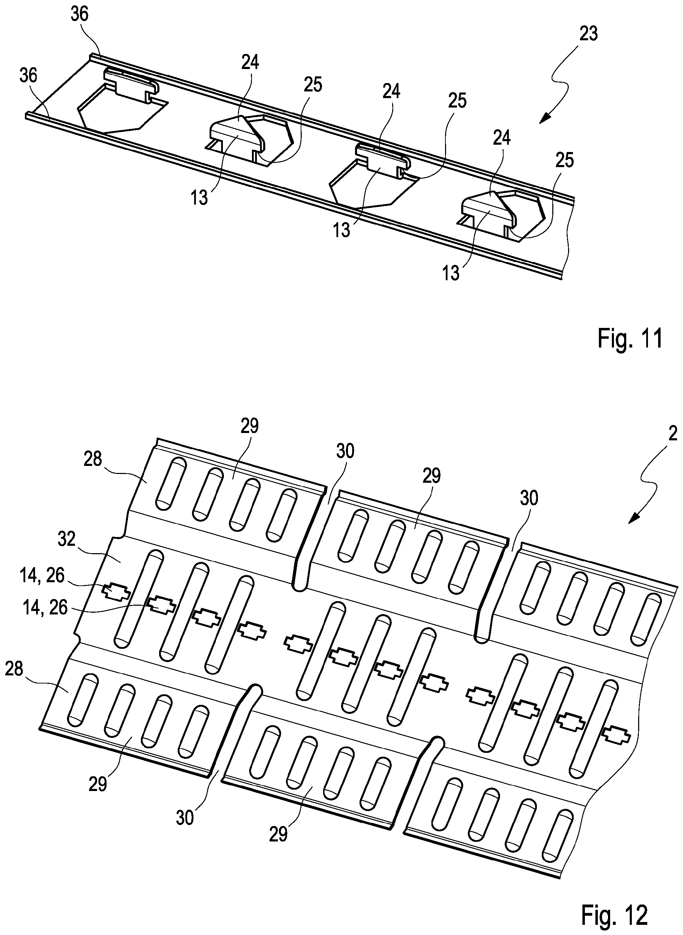

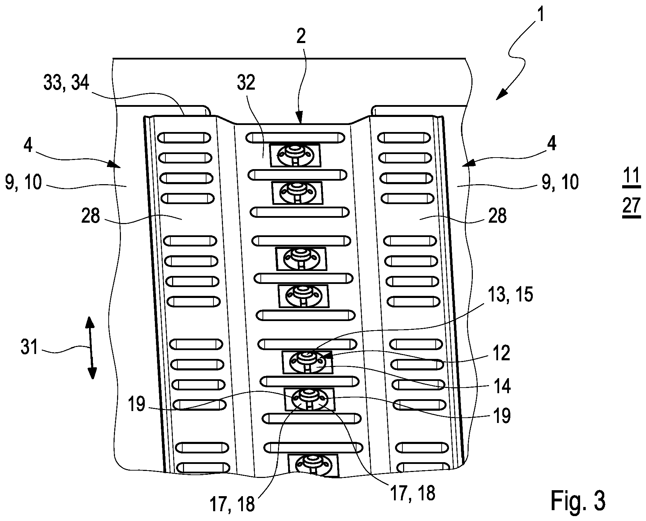

Fig. 11 zeigt eine isometrische Darstellung der zweiten Blechleiste 23 mit den daran angeordneten Rastelementen 24. Die Rastelemente 24 können an der zweiten Blechleiste 23 alternierend zu den jeweilig benachbarten Temperierelementen 9 angeordnet sein. Durch die alternierende Anordnung der Rastelemente 24 kann ein unabsichtliches und/oder ungewolltes Lösen des Anpresselementes 2 zumindest verhindert oder zumindest erschwert werden. Bevorzugt ist die zweite Blechleiste 23 monolithisch ausgebildet. Das heißt, dass beispielsweise der Hinterschnitt 25 durch eine Ausstanzung und die hervorstehenden Rastelemente 24 durch eine Aufkantung ausgebildet werden können.

Fig. 12 zeigt eine Draufsicht des Anpresselementes 2 mit daran angeordneten Klemmmitteln 14, die als Ausstanzungen 26 ausgebildet sind. Die Ausstanzungen 26 sind komplementär zu den Rastelemente 24 der zweiten Blechleiste 23 ausgebildet. Das heißt, dass die Rastelemente 24, beim Aufsetzen des Anpresselementes 2, die Ausstanzungen 26 durchdringen und mit Hilfe des Hinterschnitts 25 mit dem Anpresselement 2 verrasten.

## Patentansprüche

1. Akkumulatortemperieranordnung (1), insbesondere für ein Kraftfahrzeug (11), umfassend;
- ein elektrischer Akkumulator (3),
- eine Temperiereinrichtung (4) zum Temperieren des Akkumulators (3), die zumindest ein Temperierelement (9) aufweist, das mit einer Unterseite (8) des Akkumulators (3) in wärmeaustauschendem Kontakt steht,
- ein Anpresselement (2), das auf der von der Unterseite (8) abgewandten Seite zumindest eines solchen Temperierelements (9) angeordnet ist und zumindest ein solches Temperierelement (9) in Richtung der Unterseite (8) vorspannt,
- wobei an der Unterseite (8), an einer dem Anpresselement (2) zugewandten Seite, zumindest ein Verspannelement (13) angeordnet ist, und
- wobei das Anpresselement (2) ein zu dem Verspannelement (13) korrespondierendes Klemmmittel (14) aufweist, das zusammen mit dem Verspannelement (13) eine Verspannvorrichtung (12) bildet, die das Anpresselement (2) in Richtung der Unterseite (8) vorspannt,
**dadurch gekennzeichnet,**
- **dass** das Verspannelement (13) als eine Stufenwelle (15), mit einem definierten Hinterschnitt (16) ausgebildet ist, und
- **dass** das Klemmmittel (14) als ein federndes Klemmelement (17) ausgebildet ist, das kraft- und formschlüssig an der Stufenwelle (15) gehalten ist und insbesondere mit der Stufenwelle (15) verrastet,
- **dass** das Klemmelement (17) zum Halten der Stufenwelle (15) zwei voneinander beabstandete und einander zugewandte federnde Halbkreise (18) aufweist,
oder
- **dass** das Verspannelement (13) als eine erste Blechleiste (20), insbesondere mit zumindest einer daran in Richtung des Klemmmittels (14) hervorstehenden Rastsicke (21), ausgebildet ist,
- **dass** das Klemmmittel (14) eine zu der ersten Blechleiste (20) bzw. zu einer derartigen Rastsicke (21) korrespondierende Ausstanzung (22) aufweist, und
- **dass** die erste Blechleiste (20) bzw. eine derartige Rastsicke (21) mit dem Klemmmittel (14) in einer kraft- und formschlüssigen Wirkverbindung steht,
oder
- **dass** das Verspannelement (13) als eine zweite Blechleiste (23) mit daran hervorstehenden Rastelementen (24), die einen Hinterschnitt (25) aufweisen, ausgebildet ist, und
- **dass** das Klemmmittel (14) eine zu den Rastelementen (24) korrespondierende Ausstanzung (26) aufweist, die eine kraft- und formschlüssige Aufnahme der Rastelemente (24) ermöglicht.

2. Akkumulatortemperieranordnung nach Anspruch 1,
**dadurch gekennzeichnet,**
**dass** das Verspannelement (13) integral an der Unterseite (8) des Akkumulators (3) ausgebildet ist.

3. Akkumulatortemperieranordnung nach Anspruch 1 oder 2,
**dadurch gekennzeichnet,**
**dass** mehrere Verspannvorrichtungen (12) zum Verspannen des Anpresselementes (2) vorgesehen sind, die insbesondere aus als einteilig bzw. monolithisch ausgebildeten Verspannelementen (13) und als einteilig bzw. monolithisch ausgebildeten Klemmmitteln (14) ausgebildet sind.

4. Akkumulatortemperieranordnung nach Anspruch 1, erste Alternative,
**dadurch gekennzeichnet,**
**dass** zumindest ein derartiger federnder Halbkreis (18) eine Werkzeugaufnahme (19) aufweist, die insbesondere zum Lösen einer Rastverbindung ausgebildet ist.

5. Akkumulatortemperieranordnung nach Anspruch 1, zweite Alternative,
**dadurch gekennzeichnet,**
**dass** die Rastsicken (21) an der ersten Blechleiste (20) alternierend zu den jeweilig benachbarten Temperierelementen (9) ausgebildet sind.

6. Akkumulatortemperieranordnung nach Anspruch 1, zweite Alternative oder nach Anspruch 5,
**dadurch gekennzeichnet,**
**dass** die Rastsicken (21) konvex zu den jeweilig benachbarten Temperierelementen (9) ausgeformt sind.

7. Akkumulatortemperieranordnung nach Anspruch 1, dritte Alternative,
**dadurch gekennzeichnet,**
**dass** die Rastelemente (24) integral an der zweiten Blechleiste (23) ausgeformt sind.

8. Akkumulatortemperieranordnung nach Anspruch 1, dritte Alternative oder nach Anspruch 7,
**dadurch gekennzeichnet,**
**dass** die Rastelemente (24) an der zweiten Blechleiste (23) alternierend zu den jeweilig benachbarten Temperierelementen (9) angeordnet sind.

9. Akkumulatortemperieranordnung nach einem der Ansprüche 1, zweite Alternaive und Anspruch 5, oder Anspruch 1, dritte Alternative und Anspruch 8,
**dadurch gekennzeichnet,**
**dass** die erste Blechleiste (20) und/oder die zweite Blechleiste (23) beidseitig, jeweils an den zu den Temperierelementen (9) zugewandten Seiten, aufgekantet ist/sind.

10. Akkumulatortemperieranordnung nach einem der vorhergehenden Ansprüche,
**dadurch gekennzeichnet,**
**dass** zumindest ein derartiges Verspannelement (13) an der Unterseite (8) des Akkumulators (3) insbesondere angeschweißt, angeklebt oder angenietet ist.

11. Akkumulatortemperieranordnung nach einem der vorhergehenden Ansprüche,
**dadurch gekennzeichnet,**
**dass** das Anpresselement (2) und zumindest ein solches Temperierelement (9), das vom Anpresselement (2) in Richtung der Unterseite (8) vorgespannt ist, als eine einstückige Anpress-Temperier-Einheit (27) ausgebildet sind.

12. Anpress-Temperier-Einheit (27) einer Akkumulatortemperieranordnung (1) nach Anspruch 11.

## Claims

1. Battery temperature control arrangement (1), in particular for a motor vehicle (11), comprising;
- an electric battery (3),
- a temperature control device (4) for controlling the temperature of the battery (3), which has at least one temperature control element (9) which is in heat-exchanging contact with an underside (8) of the battery (3),
- a pressing element (2), which is arranged on the side of at least one such temperature control element (9) facing away from the underside (8) and pretensions at least one such temperature control element (9) in the direction of the underside (8),
- wherein at least one tension element (13) is arranged on the underside (8), on a side facing the pressing element (2) and
- wherein the pressing element (2) has a clamp means (14) corresponding to the tension element (13), which forms a tension device (12) together with the tension element (13), which pretensions the pressing element (2) in the direction of the underside (8),
**characterised in that**
- the tension element (13) is formed as a step shaft (15) with a defined undercut (16) and
- the clamp means (14) is formed as a resilient clamp element (17) which is held on the step shaft (15) in a non-positive and positive manner and in particular latches with the step shaft (15),
- the clamp element (17) has two resilient semicircles (18) spaced apart from one another and facing one another to hold the step shaft (15), or
- the tension element (13) is formed as a first metal sheet strip (20), in particular with at least one engagement bead (21) protruding there in the direction of the clamp means (14),
- the clamp means (14) has a perforation (22) corresponding to the first metal sheet strip (20) or to such an engagement bead (21) and
- the first metal sheet strip (20) or such an engagement bead (21) is operatively connected in a non-positive and positive manner to the clamp means (14),
or
- the tension element (13) is formed as a second metal sheet strip (23) with engagement elements (24) protruding there, which have an undercut (25) and
- the clamping means (14) has a perforation (26) corresponding to the engagement elements (24), which allows a non-positive and positive reception of the engagement elements (24).

2. Battery temperature control arrangement according to claim 1, **characterised in that** the tension element (13) is formed integrally on the underside (8) of the battery (3).

3. Battery temperature control arrangement according to claim 1 or 2, **characterised in that** a plurality of tension devices (12) are provided to tension the pressing element (2), which are in particular formed of tension elements (13) formed in a single-piece or monolithically and clamp means (14) formed in a single-piece or monolithically.

4. Battery temperature control arrangement according to claim 1, first alternative, **characterised in that** at least one such resilient semicircle (18) has a tool receptacle (19), which is in particular designed to release an engagement connection.

5. Battery temperature control arrangement according to claim 1, second alternative, **characterised in that** the engagement beads (21) are formed on the first metal sheet strip (20) alternately to the respectively adjacent temperature control elements (9).

6. Battery temperature control arrangement according to claim 1, second alternative or claim 5, **characterised in that** the engagement beads (21) are formed convexly to the respectively adjacent temperature control elements (9).

7. Battery temperature control arrangement according to claim 1, third alternative, **characterised in that** the engagement elements (24) are formed integrally on the second metal sheet strip (23).

8. Battery temperature control arrangement according to claim 1, third alternative or according to claim 7, **characterised in that** the engagement elements (24) are arranged on the second metal sheet strip (23) alternately to the respectively adjacent temperature control elements (9).

9. Battery temperature control arrangement according to any one of claims 1, second alternative and claim 5, or claim 1, third alternative and claim 8, **characterised in that** the first metal sheet strip (20) and/or the second metal sheet strip (23) is/are bent up on both sides, respectively on the sides facing the temperature control elements (9).

10. Battery temperature control arrangement according to any one of the preceding claims, **characterised in that** at least one such tension element (13) is in particular welded, adhered or riveted on the underside (8) of the battery (3).

11. Battery temperature control arrangement according to any one of the preceding claims, **characterised in that** the pressing element (2) and at least one such temperature control element (9), which is pretensioned by the pressing element (2) in the direction of the underside (8), are formed as a single-piece pressing temperature control unit (27).

12. Pressing temperature control unit (27) of a battery temperature control arrangement (1) according to claim 11.

## Revendications

1. Dispositif de thermorégulation d'accumulateur (1), en particulier pour un véhicule automobile (11), comprenant :
- un accumulateur électrique (3),
- un dispositif de thermorégulation (4) qui est destiné à réguler la température de l'accumulateur (3) et qui comporte au moins un élément de thermorégulation (9) qui est en contact d'échange thermique avec un dessous (8) de l'accumulateur (3),
- un élément de serrage (2) qui est agencé sur le côté, opposé au dessous (8), d'au moins un élément de thermorégulation (9) de ce type et qui contraint au moins un élément de thermorégulation (9) de ce type en direction du dessous (8),
- dans lequel au moins un élément de serrage (13) est agencé au niveau du dessous (8), au niveau d'un côté proche de l'élément de serrage (2),
- dans lequel l'élément de serrage (2) comporte un moyen de blocage (14) qui correspond à l'élément de serrage (13) et qui forme avec l'élément de serrage (13) un dispositif de serrage (12) qui contraint l'élément de serrage (2) en direction du dessous (8),
**caractérisé**
- **en ce que** l'élément de serrage (13) est réalisé comme un arbre à gradins (15), avec un profil en contre-dépouille (16) défini, et
- **en ce que** le moyen de blocage (14) est réalisé comme un élément de blocage (17) faisant ressort qui est maintenu par force et concordance de forme au niveau de l'arbre à gradins (15) et qui s'enclenche en particulier dans l'arbre à gradins (15),
- **en ce que** l'élément de blocage (17) comporte pour le maintien de l'arbre à gradins (15) deux demi-cercles (18) faisant ressort, distants l'un de l'autre et tournés l'un vers l'autre,
ou
- **en ce que** l'élément de serrage (13) est réalisé comme une première latte en tôle (20), en particulier avec au moins une moulure de crantage (21) dépassant dessus en direction du moyen de blocage (14),
- **en ce que** le moyen de blocage (14) comporte une découpe (22) qui correspond à la première latte en tôle (20) ou à une moulure de crantage (21) de ce type, et
- **en ce que** la première latte en tôle (20) ou une moulure de crantage (21) de ce type est en liaison active par force et concordance de forme avec le moyen de blocage (14),
ou
- **en ce que** l'élément de serrage (13) est réalisé comme une deuxième latte en tôle (23) avec des éléments de crantage (24) dépassant dessus qui présentent un profil en contre-dépouille (25), et
- **en ce que** le moyen de blocage (14) comporte une découpe (26) qui correspond aux éléments de crantage (24) et qui permettent le logement par force et concordance de forme des éléments de crantage (24).

2. Dispositif de thermorégulation d'accumulateur selon la revendication 1, **caractérisé en ce que** l'élément de serrage (13) est réalisé intégré au dessous (8) de l'accumulateur (3).

3. Dispositif de thermorégulation d'accumulateur selon la revendication 1 ou 2, **caractérisé en ce que** plusieurs dispositifs de serrage (12) sont prévus pour contraindre l'élément de serrage (2), lesquels sont réalisés en particulier à partir d'éléments de serrage (13) réalisés d'une seule pièce ou monoblocs et de moyens de blocage (14) réalisés d'une seule pièce ou monoblocs.

4. Dispositif de thermorégulation d'accumulateur selon la revendication 1, première variante, **caractérisé en ce qu'**au moins un demi-cercle (18) faisant ressort de ce type comporte un logement pour outil (19) qui est réalisé en particulier pour défaire une liaison enclenchée.

5. Dispositif de thermorégulation d'accumulateur selon la revendication 1, deuxième variante, **caractérisé en ce que** les moulures d'enclenchement (21) sont réalisées au niveau de la première latte en tôle (20) en alternance avec les éléments de thermorégulation (9) respectivement voisins.

6. Dispositif de thermorégulation d'accumulateur selon la revendication 1, deuxième variante, ou selon la revendication 5, **caractérisé en ce que** les moulures d'enclenchement (21) sont formées convexes par rapport aux éléments de thermorégulation (9) respectivement voisins.

7. Dispositif de thermorégulation d'accumulateur selon la revendication 1, troisième variante, **caractérisé en ce que** les éléments de crantage (24) sont formés intégrés à la deuxième latte en tôle (23).

8. Dispositif de thermorégulation d'accumulateur selon la revendication 1, troisième variante, ou selon la revendication 7, **caractérisé en ce que** les éléments de crantage (24) sont agencés au niveau de la deuxième latte en tôle (23) en alternance avec les éléments de thermorégulation (9) respectivement voisins.

9. Dispositif de thermorégulation d'accumulateur selon l'une quelconque des revendications 1, deuxième variante, et revendication 5, ou revendication 1, troisième variante, et revendication 8, **caractérisé en ce que** la première latte en tôle (20) et/ou la deuxième latte en tôle (23) sont placées de chant, des deux côtés, à chaque fois au niveau des côtés proches des éléments de thermorégulation (9).

10. Dispositif de thermorégulation d'accumulateur selon l'une quelconque des revendications précédentes, **caractérisé en ce qu'**au moins un élément de serrage (13) de ce type est notamment soudé, collé ou riveté au dessous (8) de l'accumulateur (3).

11. Dispositif de thermorégulation d'accumulateur selon l'une quelconque des revendications précédentes, **caractérisé en ce que** l'élément de serrage (2) et au moins un élément de thermorégulation (9) de ce type, qui est précontraint par l'élément de serrage (2) en direction du dessous (8), sont formés comme une unité de serrage et de thermorégulation (27) d'une seule pièce.

12. Unité de serrage et de thermorégulation (27) d'un dispositif de thermorégulation d'accumulateur (1) selon la revendication 11.
